# EUROPÄISCHE PATENTANMELDUNG

(11) **EP 0 538 884 A1**
(43) Veröffentlichungstag der Anmeldung: **28.04.1993**
(21) Anmeldenummer: 92118200.2
(22) Anmeldetag: 23.10.1992
(51) Int. Cl.: F16F 9/02, F16F 9/52

(54) **Gasfeder**

(30) Priorität: 25.10.1991 DE 4135295
(71) Anmelder: David & Baader DBK Spezialfabrik elektrischer Apparate und Heizwiderstände GmbH, D-76870 Kandel (DE)
(72) Erfinder: Bohlender, Franz, W-6744 Kandel (DE); Buchlaub, Norbert, W-6729 Hagenbach (DE); Escandell, Gillian, F-6700 Strasbourg (FR)
(74) Vertreter: Grünecker, Kinkeldey, Stockmair & Schwanhäusser Anwaltssozietät

(57) **Zusammenfassung**

Die Erfindung bezieht sich auf eine Gasfeder mit der Besonderheit, daß eine elektrische Heizung vorgesehen ist, mit der das Gas im Kolben erwärmt werden kann.

## Beschreibung

Die vorliegende Erfindung bezieht sich auf eine Gasfeder nach dem Oberbegriff des Anspruchs 1. Derartige Gasfedern werden in zunehmendem Maße in Kraftfahrzeugen eingesetzt, um Heckklappen oder Koffferraumdeckel in Öffnungsrichtug vorzuspannen. Sowohl die Feder- als auch die Dämpferwirkung dieser Gasfedern ist aber temperaturabhängig, so daß die gewünschte mechanische Charakteristik und der Federdruck von der Umgebungstemperatur abhängen. Insbesondere die bei niedrigeren Temperaturen stark nachlassende Federwirkung wird als lästig empfunden.

Es sind bereits Gasfedern bekannt, bei denen der das Druckgas enthaltende Innenraum in Abhängigkeit von der Temperatur geändert wird, um den nachteiligen Wirkungen unterschiedlicher Umgebungstemperaturen entgegenzuwirken. In der DE-OS 39 02 361 wird zum Ausgleich der Temperaturschwankungen ein Kompessor angegeben, der die angeschlossene Gasfeder mit konstantem Druck versorgt. Alle diese Lösungen sind aber konstruktiv sehr aufwendig.

Der vorliegenden Erfindung liegt die Aufgabe zugrunde, eine von den Einflüssen der Umgebungstemperatur weitgehend unabhängige Gasfeder anzugeben, die einfach aufgebaut ist.

Diese Aufgabe wird ausgehend vom Oberbegriff des Anspruchs 1 mit seinen kennzeichnenden Merkmalen gelöst.

Der vorliegenden Erfindung liegt die Erkenntnis zugrunde, daß es mit einer in der Gasfeder vorgesehenen elektrischen Heizung, die ohne großen Aufwand realisiert werden kann, möglich ist, die nachteiligen Auswirkungen der Schwankungen der Außentemperatur auf einfache Weise weitgehend zu kompensieren.

Vorteilhafte Weiterbildungen sind den Unteransprüchen zu entnehmen.

Anhand von zwei in der Zeichnung dargestellten Ausführungsbeispielen wird die Erfindung im folgenden näher erläutert:
Es zeigen:
- Fig. 1: eine Schnittansicht der Gasfeder,
- Fig. 2: ein erstes Ausführungsbeispiel des Dämpungskolbens mit integrierter Heizung, und
- Fig. 3: ein zweites Ausführungsbeispiel mit abnehmbarer Heizung.

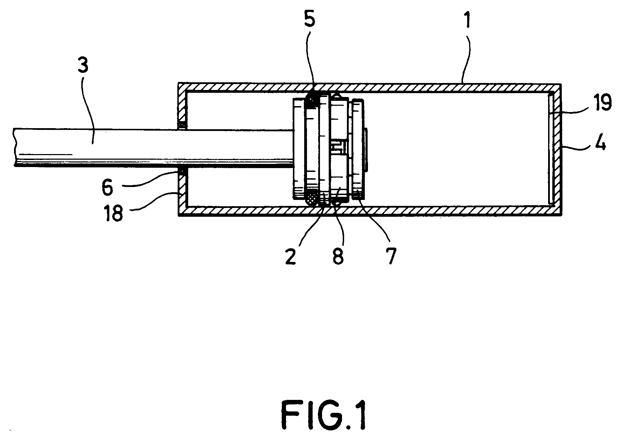

Die in Fig. 1 dargestellte Gasfeder besteht aus einem metallischen Zylinder 1, einem darin gelagerten Dämpfungskolben 2 mit einer metallischen Kolbenstange 3. Der Zylinder 1 hat einen geschlossenen Boden 4, und der Dämpfungskolben 2 weist eine in einer Ringnut gelegene Dichtung 5 auf. Die überlicherweise vorgeseshenen Bypaß- und Durchlaßöffnungen und die eventuell vorgesehenen Ventile sind nicht näher dargestellt. An dem Ende des Zylinders 1, an dem die Kolbenstange 3 austritt, befindet sich eine fest mit dem Zylinder 1 verbundene Dichtung 6, die auf der Kolbenstange 3 gleitet und den Zylinderinnenraum nach außen abdichtet.

Auf der der Kolbenstange 3 gegenüberliegenden Seite des Dämpfungskolbens 2 ist eine Anschlagplatte 7 montiert.

Zwischen dieser Anschlagplatte 7 und der Ringnut mit Dichtung 5 liegt eine elektrische Heizung 8.

Die Heizung 8 besteht aus einem becherförmigen Gehäuse 9 aus Kunststoff, einer Elektrodenplatte 10 aus Metall mit vier darauf angeordneten, scheibenförmigen PTC-Heizelementen 11, radial nach außen ragenden mit der Elektrodenplatte 10 elektrisch verbundenen oder einstückig damit ausgebildeten Kontaktfingern 12 und einer weiteren Elektrodenplatte 14. Das Gehäuse 9 weist eine zentrale Bohrung 15 auf, die mit einem zylindrischen Kragen 16 versehen ist und einen Innendurchmesser aufweist, der dem Außendurchmesser des Teiles der Kolbenstange 3 entspricht, auf dem das Gehäuse 9 sitzt. Im zylindrischen Außenumfang sind vier Schlitze 17 vorgesehen, durch die die Kontaktfinger 12 hindurchgreifen, um an der Innenwand des Zylinders 1 gleiten zu können. Die beiden Elektrodenplatten 10 und 14 weisen jeweils zentrale Bohrungen auf. Die Bohrung in der Elektrodenplatte 10 ist so bemessen, daß der axiale Kragen 16 am Gehäuse 9 hindurchgreift, während die Bohrung in der Elektrodenplatte 14 so bemessen ist, daß sie eng auf der Kolbenstange 3 aufsitzt, um eine elektrische Verbindung mit der Kolbenstange 3 herzustellen. Zur Verbesserung dieser elektrischen Verbindung kann auch an der Kolbentange 3 eine Schulter oder eine Schraubverbindung vorgesehen sein, um den elektrischen Kontakt sicherzustellen. Die axialen Abstände sind so bemessen, daß die Anschlagplatte 7 die PTC-Heizelemente 11 mit ausreichendem Kontaktdruck zwischen die Elektrodenplatten 10, 14 einspannt und einen ausreichenden Kontaktdruck zwischen der Elektrodenplatte 14 und dieser Anschlagplatte 7 herstellt. Gegebenenfalls können beide Elektrodenplatten 10, 14, oder eine davon, als Federscheibe ausgebildet sein, oder es kann eine zusätzliche Federscheibe vorgesehen sein, um etwaige Toleranzen auszugleichen. Dabei können die Elektrodenplatten oder die Federscheibe aus gewelltem Federblech oder dergleichen bestehen. Die beschriebene Heizung 8 kann auf der der Kolbenstange 3 zugewandten Seite des Dämpfungskolbens 2 angeordnet sein. Es besteht auch die Möglichkeit, derartige Heizungen 8 auf beiden Seiten des Dämpfungskolbens 2 vorzusehen.

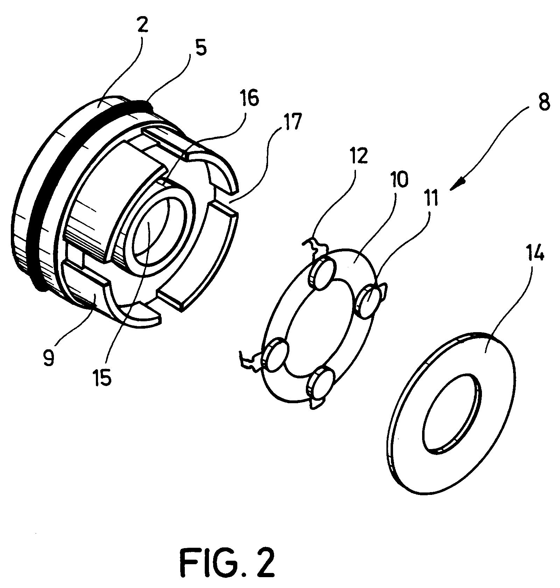

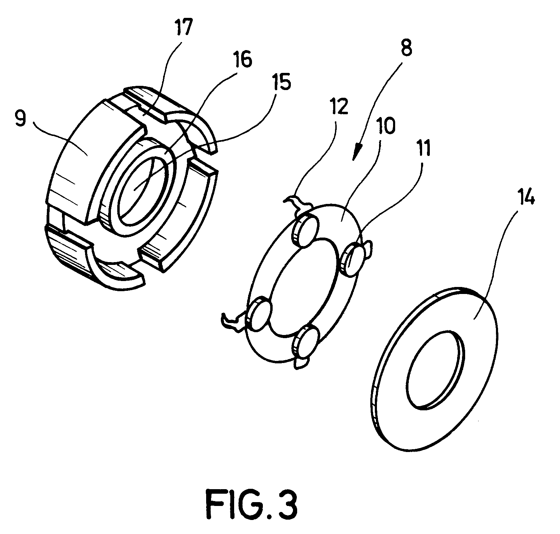

Die Ausführungsformen nach den Fig. 2 und 3 unterscheiden sich lediglich dadurch, daß bei dem Ausführungsbeispiel nach Fig. 3 die Heizung 8 als separate Baueinheit ausgebildet ist, die möglicherweise auch nachträglich in eine solche Gasfeder eingesetzt werden kann, während bei dem Ausführungsbeispiel nach Fig. 2 das Gehäuse 9 in den Dämpfungskolben 2 integriert ist.

PTC-Heizelemente haben die besondere Eigenschaft, daß sie bei Annäherung an ihre Grenztemperatur die aufzunehmende Leistung selbständig drosseln. Fur den hier vorliegenden Anwendungsfall erscheint eine in der Gasfeder zu erreichende Temperatur von ca. 40^{o}C erstrebenswert, so daß PTC-Heizelemente sinnvoll erscheinen, die eine Grenztemperatur von etwa 50^{o}C aufweisen. Die Heizung 8 erfordert je nach Umgebungstemperatur nur wenige Watt, weil sie im Inneren der Gasfeder angeordnet ist. Dadurch wird nicht nur das abgeschlossene Gasvolumen auf einer in etwa konstanten Temperatur gehalten, sondern es werden auch diejenigen Teile der Gasfeder erwärmt, die bei der Bewegung zu den erforderlichen Reibungs- und Dämpfungseigenschaften fuhren.

Die Stromzuführung zu den beiden Elektrodenplatten 10 und 14 erfolgt über den Zylinder 1 einerseits und die Kolbenstange 3 andererseits. Dafür sind nicht näher dargestellte Kontaktschuhe vorgesehen, mit denen die üblichen Anschlußleitungen verbunden werden können. Die Dichtungen 5,6 sollten aus möglichst gut isolierendem Material bestehen. Außerdem können im Bedarfsfall auch noch an den Enden des Zylinders 1 Isolierplatten vorgesehen sein, wenn Seiten des Dämpfungskolbens 2 metallische Teile aufweisen sollten, die zu einem Kurzschluß zwischen Zylinder 1 und Kolbenstange 3 führen könnten. Eine solche Isolierscheibe 19 ist in Fig. 1 eingezeichnet.

## Patentansprüche

1. Gasfeder mit einem metallischen, einseitig geschlossenen Zylinder, einem darin gelagerten Dämpfungskolben, einer mit dem Dämpfungskolben verbundenen metallischen Kolbenstange und einer am offenen Ende des Zylinders zwischen dem Zylinder und der Kolbenstange vorgesehenen Dichtung, **dadurch gekennzeichnet,** daß im Bereich des Dämpfungskolbens (2) eine elektrische Heizung (8) vorgesehen ist.

2. Gasfeder nach Anspruch 1, **dadurch gekennzeichnet,** daß die Heizung (8) wenigstens ein PTC-Heizelement (11) aufweist, das zwischen zwei scheiben- oder ringscheibenförmige Elektroden (10, 14) eingespannt ist.

3. Gasfeder nach Anspruch 2, **dadurch gekennzeichnet,** daß die eine Elektrode (14) mit der Kolbenstange (3) und die andere Elektrode (10) über wenigstens einen radial nach außen ragenden Kontaktfinger (12) mit dem Zylinder (1) elektrisch leitend verbunden ist.

4. Gasfeder nach Anspruch 3, **dadurch gekennzeichnet,** daß die beiden Elektroden (10, 14) und die dazwischen liegenden PTC-Heizelemente (11) in einem Gehäuse (9) aus Kunststoff liegen, das axiale Schlitze (17) oder Öffnungen zum Durchtritt für die Kontaktfinger (12) aufweist.

5. Gasfeder nach Anspruch 4, **dadurch gekennzeichnet,** daß das Gehäuse (9) mit dem Kolben (2) eine Baueinheit bildet.
